(19) Europäisches Patentamt
European Patent Office
Office européen des brevets

(11) **EP 4 375 885 A1**

(12) **EUROPEAN PATENT APPLICATION**

(43) Date of publication:
**29.05.2024 Bulletin 2024/22**

(21) Application number: **23203809.1**

(22) Date of filing: **16.10.2023**

(51) International Patent Classification (IPC):
**G06N 3/092** (2023.01)      **G06N 3/096** (2023.01)
**G06N 3/0455** (2023.01)

(52) Cooperative Patent Classification (CPC):
**G06N 3/092; G06N 3/0455; G06N 3/096**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2022 KR 20220159388**

(71) Applicant: **Research & Business Foundation
Sungkyunkwan
University
Gyeonggi-do 16419 (KR)**

(72) Inventors:
• **WOO, Hong Uk**
  **16419 Suwon-si, Gyeonggi-do (KR)**
• **YOO, Min Jong**
  **16419 Suwon-si, Gyeonggi-do (KR)**
• **CHO, Sang Woo**
  **16419 Suwon-si, Gyeonggi-do (KR)**

(74) Representative: **BCKIP Part mbB
Siegfriedstraße 8
80803 München (DE)**

(54) **MULTI-TASK OFFLINE REINFORCEMENT LEARNING MODEL BASED ON SKILL REGULARIZED TASK DECOMPOSITION AND MULTI-TASK OFFLINE REINFORCEMENT LEARNING METHOD USING THE SAME**

(57)    A reinforcement learning model of the present disclosure may include a skill regularized task decomposition model in consideration of quality and a data augmentation model through generating an imaginary demo. The skill regularized task decomposition model may perform an operation of performing skill embedding using 2n-step state-action pairs, an operation of performing skill regularization using n-step transitions including states, actions, rewards, and next states, and an operation of decomposing a task in units of episodes into subtasks in units of n-steps.

EP 4 375 885 A1

**Description**

The present application claims the benefit of Korean Patent Application No. 10-2022-0159388 filed in the Korean Intellectual Property Office on November 24, 2022.

BACKGROUND

1. Field

The present disclosure relates to a reinforcement learning model and a reinforcement learning method, and more specifically, to a multi-task offline reinforcement learning model based on skill regularized task decomposition and a multi-task offline reinforcement learning method using the same.

2. Description of the Related Art

Reinforcement learning-based control technologies efficiently solve complex real-world problems using a variety of offline data. However, data given in data-based learning methods that cannot interact with the real environment may be of poor quality in the collected policies or the amount of data may be insufficient. The above problems greatly reduce offline reinforcement learning performance.

There are two methods of training multi-task learning that learns multiple tasks, including firstly a soft-modularization technique that utilizes a module-based network structure and attention to utilize the knowledge of various tasks, and secondly a gradient surgery method of regulating a gradient generated during update to train to adjust a conflict of knowledge between tasks generated during learning.

However, both the soft-modularization technique and the gradient surgery method have problems with inconsistent data quality and poor learning performance in offline situations where data is insufficient.

Furthermore, a task inference method of learning through inferring a task to be currently performed has a problem in that it cannot decompose the task into small units of subtasks, making it difficult to share data between other tasks. Therefore, the task inference method causes a problem in that learning performance is reduced in situations where there is insufficient data.

CITATION LIST: (Patent Literature) Korean Patent Publication No. 10-2022-0117625 "Autonomous CPS Self-Evolution Framework Based on Federated Reinforcement Learning for Performance Self-Evolution of Autonomous CPS and Performance Self-Evolution Method of Autonomous CPS Using the Same"

SUMMARY

An aspect of the present disclosure is to provide a reinforcement learning model that enables efficient and stable learning of a control model through skill regularized task decomposition in consideration of data quality in a multi-task offline reinforcement learning environment in which the quality of data is inconsistent and data is insufficient.

Another aspect of the present disclosure is to provide a reinforcement learning method that enables efficient and stable learning of a control model through skill regularized task decomposition in consideration of data quality in a multi-task offline reinforcement learning environment in which the quality of data is inconsistent and data is insufficient.

However, the problem to be solved by the present disclosure is not limited to the above-mentioned problem, and may be expanded in various ways without departing from the concept and scope of the present disclosure.

In order to achieve an object of the present disclosure, a reinforcement learning model according to embodiments of the present disclosure may include a skill regularized task decomposition model in consideration of quality and a data augmentation model through generating an imaginary demo. The skill regularized task decomposition model may perform an operation of performing skill embedding using 2n-step state-action pairs, an operation of performing skill regularization using n-step transitions including states, actions, rewards, and next states, and an operation of decomposing a task in units of episodes into subtasks in units of n-steps.

In one embodiment, the skill regularized task decomposition model may decompose a task into subtasks by matching the subtasks to a plurality of skills in units of action sequences. The data augmentation model may perform reinforcement learning by sharing the skill corresponding to the subtask among the plurality of tasks.

In one embodiment, when performing the operation of performing skill embedding, the skill regularized task decomposition model may map the 2n-step state-action pairs of offline data to a skill candidate space, and infer the 2n-step state-action pairs using the mapped candidate vector.

In one embodiment, the skill embedding may be performed through training using a skill embedding loss of [Equation 1] below.

[Equation 1]

$$L_{SE}(\phi) = \frac{1}{m}\sum_{i=1}^{m}\sum_{j=-n}^{n-1}\|a_{t_i+j} - p_\phi(s_{t_i+j}, q_\phi(d_{t_i}))\|_2 + \lambda L_{PR}(\{\tilde{b}\}_{i=1}^{m}, q_\phi(\{d_{t_i}\}_{i=1}^{m}))$$

$$L_{PR}(\{b\},\{\tilde{b}\}) = \frac{1}{m(m-1)}\sum_{i\neq j}k(b_i,b_j) + \frac{1}{m(m-1)}\sum_{i\neq j}k(\tilde{b}_i,\tilde{b}_j) - \frac{1}{m^2}\sum_{i,j}k(b_i,\tilde{b}_j)$$

(Here, $q_\phi$ is a skill encoder, $p_\phi$ is a skill decoder, $a_t$ is an action at time t, \$t is a state at time t, $\tilde{b}$ is skill embedding, and $d_t$ is state-action pairs from t-n to t+n-1.)

In one embodiment, when performing the operation of performing skill regularization, the task regularized task decomposition model may map n-step transitions to a task candidate space in case of data above a reference quality, solved by the same skill, infer with the same task in case of data above the reference quality, and infer with another task in case of data below the reference quality.

In one embodiment, the skill regularization may be performed through training using a skill regularized loss of [Equation 2] below.

[Equation 2]

$$L_{SRTD}(\theta) = L_{TE}(\theta) + L_{SR}(\theta) + \lambda L_{PR}(\{\tilde{z}_i\}_{i=1}^{m} \sim P_Z, q_\theta(\{\tau_{t_i}\}_{i=1}^{m}))$$

$$L_{TE}(\theta) = \frac{1}{m}\sum_{i=1}^{m}\sum_{j-n}^{0}\|(s_{t_i+j+1}, r_{t_i+j}) - p_\theta(s_{t_i+j}, a_{t_i+j}, q_\theta(\tau_{t_i}))\|_2,$$

$$L_{SR} = \frac{1}{m}\sum_{i=1}^{m}\tilde{R}(s_{t_i},a_{t_i}) \cdot \|q_\theta(\tau_{t_i}) - q_\phi(d_{t_i})\|_2$$

(Here, $q_\theta$ is a task encoder, $p_\theta$ is a task decoder, $r_t$ is a reward at time t, $\tau$ is a transition, $z$ is a subtask embedding vector, and $\tilde{R}$ is a reward sum of episodes including state-action pairs.)

In one embodiment, when performing the operation of decomposing the task in the units of episodes into the subtasks in units of n-steps, the skill regularized task decomposition model may infer a subtask using the task encoder trained in the skill regularized process.

In one embodiment, the data augmentation model may generate the imaginary demo by inferring data generated when performing a skill that is appropriate for a given task using the skill regularized task decomposition model, and augment learning data by training through adding subtask information to an input value.

In one embodiment, the imaginary demo may be generated through [Equation 3] below.

[Equation 3]

$$\tilde{a_t}, (\widetilde{s_{t+1}}, \tilde{r_t}) = p_\phi(s_t, \tilde{z_t}), p_\theta(s_t, \tilde{a_t}, \tilde{z_t})$$

(Here, $z_t = q_\phi(\tau_t)$, $a_t$ is an action at time t, $s_t$ is a state at time t, $r_t$ is a reward at time t, $z$ is a subtask embedding vector, $q_\theta$ is a task encoder, and $p_\theta$ is a task decoder.)

In order to achieve another object of the present disclosure, a reinforcement learning model according to embodiments of the present disclosure may include performing skill regularized task decomposition in consideration of quality and performing data augmentation through generating an imaginary demo. The performing of skill regularized task decomposition may include performing skill embedding using 2n-step state-action pairs, performing skill regularization using n-step transitions including states, actions, rewards, and next states, and decomposing a task in units of episodes into subtasks in units of n-steps.

According to a reinforcement learning model and a reinforcement learning method of the present disclosure may enable efficient and stable learning of a control model through skill regularized task decomposition in consideration of data quality in a multi-task offline reinforcement learning environment in which the quality of data is inconsistent and data is insufficient.

However, the effects of the present disclosure are not limited to the above-mentioned effects, and may be extended in various ways without departing from the concept and scope of the present disclosure.

BRIEF DESCRIPTION OF THE DRAWINGS

FIG. 1 is a conceptual view showing a configuration of a reinforcement learning model according to embodiments of the present disclosure.

FIG. 2 is a flowchart showing an operation of the reinforcement learning model of FIG. 1.

FIG. 3 is a flowchart showing detailed steps of a skill regularized task decomposition phase.

FIG. 4 is a view showing a structure of a skill regularized task decomposition model in consideration of quality.

FIG. 5 is an algorithm showing a learning process of the skill regularized task decomposition model in consideration of quality.

FIG. 6 is a view showing a structure of a data augmentation model through generating an imaginary demo.

FIG. 7 is a diagram showing a robot arm control learning performance to which a reinforcement learning model according to embodiments of the present disclosure is applied.

FIG. 8 is a diagram showing a drone driving learning performance to which a reinforcement learning model according to embodiments of the present disclosure is applied.

DETAILED DESCRIPTION

Specific structural or functional descriptions of embodiments according to the concept of the present disclosure disclosed herein are merely intended for the purpose of describing the embodiments according to the concept thereof, which may be implemented in various forms and are not limited to the embodiments described herein.

Various modifications may be made to the embodiments according to the concept of the present disclosure so as to have various forms, and thus the embodiments will be illustrated in the drawings and described in detail herein. However, it should be understood that the embodiments according to the concept of the present disclosure should not be intended to limit specific discloses forms thereof, and include all changes, equivalents or substitutes within the concept and the technical scope of the present disclosure.

Although terms of "first," "second," and the like are used to explain various components, the components are not limited to such terms. These terms are used only to distinguish one component from another component, and for example, a first component may be referred to as a second component, or similarly, the second component may be referred to as the first component within the scope of the present disclosure.

When it is mentioned that one component is "connected" or "coupled" to another component, it should be understood that the one component is directly connected or coupled to another component or that still another component is interposed between these two components. On the contrary, it should be understood that when it is mentioned herein that a component is "directly connected" or "directly coupled" to another component, a still another component may not be present therebetween. Likewise, expressions, for example, "between" and "immediately between" and "adjacent to" and "immediately adjacent to" may also be construed as described in the foregoing.

It should be noted that terms used herein are merely used to describe specific embodiments, but not to limit the present disclosure. As used herein, the singular forms are intended to include the plural forms as well, unless the context clearly indicates otherwise. It will be further understood that the terms "include" and/or "have", when used herein, specify the presence of stated features, integers, steps, operations, elements, components or a combination thereof, but do not preclude the presence or addition of one or more other features, integers, steps, operations, elements, components, and/or combinations thereof.

Unless defined otherwise, the terms used herein including technological or scientific terms have the same meaning that is generally understood by those ordinarily skilled in the art to which the invention pertains. The terms defined in a generally used dictionary should be understood to have meanings identical to those used in the context of the related art, and are not to be construed to have ideal or excessively formal meanings unless they are obviously defined herein.

Hereinafter, embodiments will be described in detail with reference to the accompanying drawings. However, the scope of the patent application is not limited or restricted by these embodiments. Like reference numerals in each drawing refer to like elements.

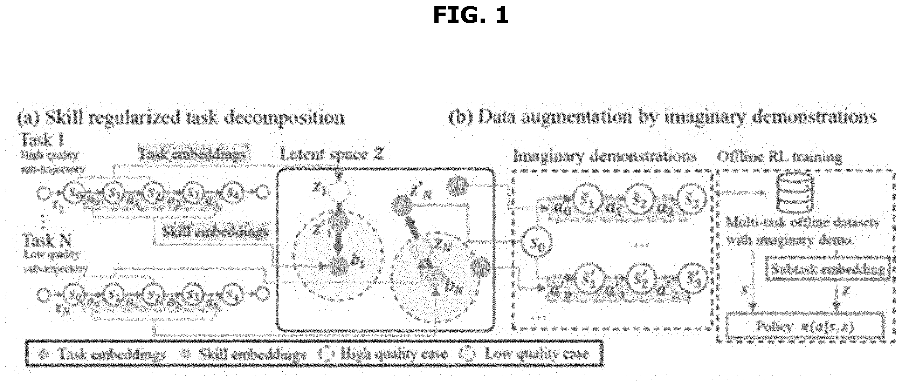

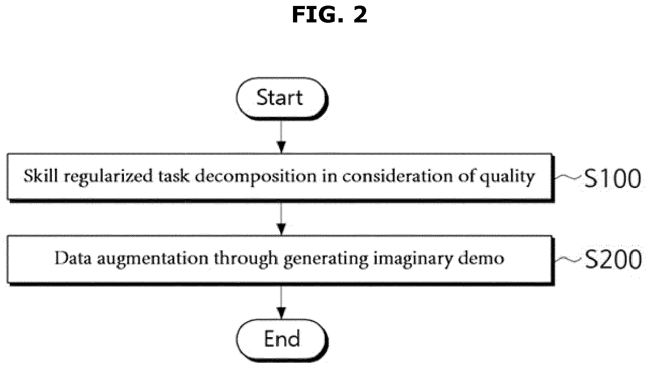

FIG. 1 is a conceptual view showing a configuration of a reinforcement learning model according to embodiments of the present disclosure, and FIG. 2 is a flowchart showing an operation of the reinforcement learning model of FIG. 1.

Referring to FIG. 1, the reinforcement learning model of the present disclosure may include a skill regularized task decomposition model in consideration of quality and a data augmentation model through generating an imaginary demo.

For example, the reinforcement learning model of the present disclosure may include a skill regularized task decomposition inference model consisting of a skill embedding model and a task embedding model in order to perform stable reinforcement learning despite unobservable environmental changes.

As shown in FIG. 2, the reinforcement learning model may perform skill regularized task decomposition in consideration of quality (S100), and perform data augmentation through generating an imaginary demo (S200).

For example, the skill regularized task decomposition model may decompose a task into subtasks by matching the subtasks to a plurality of skills in units of action sequences.

The task may refer to a Markov decision process that models an environment of reinforcement learning. Here, the Markov decision process is expressed as a 4-tuple of ($S, A, P, R$). Each character of ($S, A, P, R$) may indicate the following:

*S: State space, A: Action space, P: Transition probability, R: Reward function*

A multi-task environment refers to an environment consisting of multiple tasks, and may generally be expressed as a set of multiple tasks with different transition probabilities and reward functions $\{(\boldsymbol{S}, \boldsymbol{A}, \boldsymbol{P_i}, \boldsymbol{R_i})\}_i$.

A subtask may refer to a target that must be performed over a short period of time in order to perform an entire task. By utilizing subtask embedding ($z$), a multi-task environment may be expressed as a single Markov decision process ($S \times Z, A, P, R$).

Skill may refer to an action sequence (e.g., $a_0, a_1, a_2, ..., a_N$) generated by an agent.

For example, the data augmentation model may perform reinforcement learning by sharing the skill corresponding to the subtask among the plurality of tasks.

Accordingly, the reinforcement learning model of the present disclosure may perform efficient and stable learning of a control model through skill regularized task decomposition in consideration of data quality in a multi-task offline reinforcement learning environment in which the quality of data is inconsistent and data is insufficient.

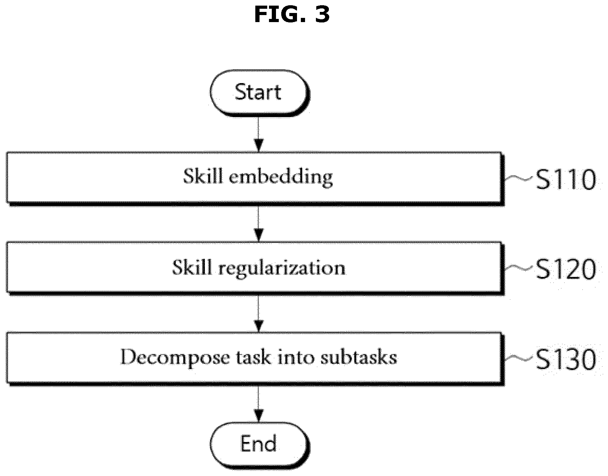

Hereinafter, a more detailed configuration and operation of the reinforcement learning model of the present disclosure will be described through FIGS. 3 to 6.

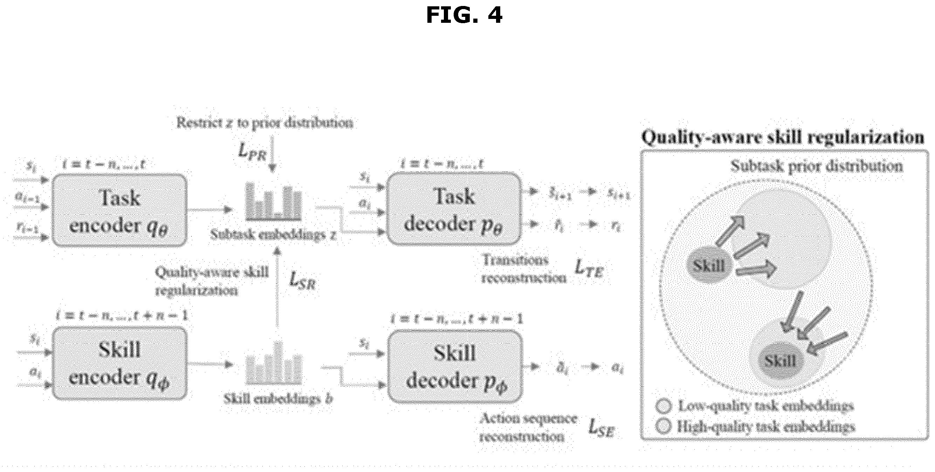

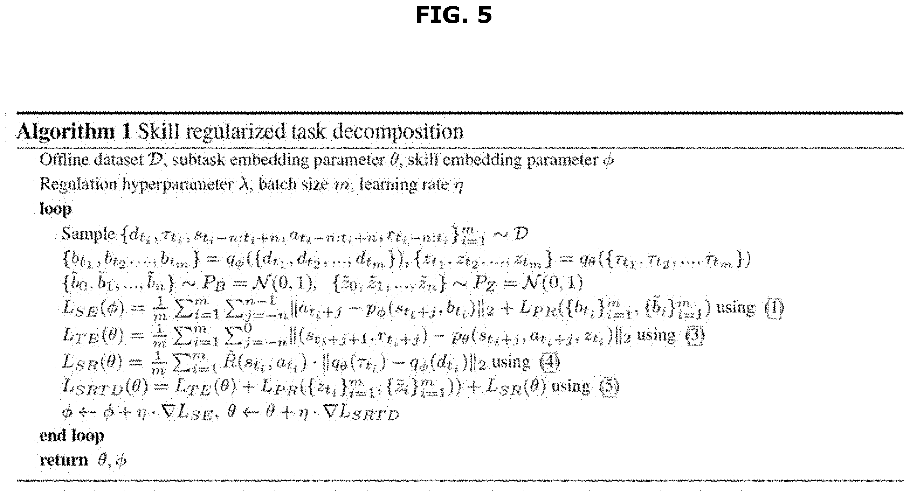

FIG. 3 is a flowchart showing detailed steps of a skill regularized task decomposition phase, FIG. 4 is a view showing a structure of a skill regularized task decomposition model in consideration of quality, and FIG. 5 is an algorithm showing a learning process of the skill regularized task decomposition model in consideration of quality.

Referring to FIGS. 3 to 5, the skill regularized task decomposition model may decompose a task into subtasks by matching the subtasks to a plurality of skills in units of action sequences.

For example, as shown in FIG. 3, the skill regularized task decomposition model may perform skill embedding (S110), perform skill regularization (S120), and decompose a task into subtasks (S130).

Specifically, the skill regularized task decomposition model may perform an operation of performing skill embedding using 2n-step state-action pairs, an operation of performing skill regularization using n-step transitions including states, actions, rewards, and next states, and an operation of decomposing a task in units of episodes into subtasks in units of n-steps.

In one embodiment, skill embedding may aim to embed an action of a policy function over a short period of time into a specific vector using 2n-step state-action pairs.

When performing the operation of performing skill embedding, the skill regularized task decomposition model may map the 2n-step state-action pairs of offline data to a skill candidate space, and infer the 2n-step state-action pairs using the mapped candidate vector.

Specifically, the skill regularized task decomposition model may map 2n-step state-action pairs of given offline data to a specific skill latent space, infer 2n-step actions that are given during the mapping process using the mapped latent vector and state, and train a skill encoder and a skill decoder using a skill embedding loss.

For example, the skill embedding may be performed through training using a skill embedding loss of [Equation

1] below.

[Equation 1]

$$L_{SE}(\phi) = \frac{1}{m} \sum_{i=1}^{m} \sum_{j=-n}^{n-1} \|a_{t_i+j} - p_\phi(s_{t_i+j}, q_\phi(d_{t_i}))\|_2 + \lambda L_{PR}(\{\tilde{b}\}_{i=1}^m, q_\phi(\{d_{t_i}\}_{i=1}^m))$$

$$L_{PR}(\{b\}, \{\tilde{b}\}) = \frac{1}{m(m-1)} \sum_{i \neq j} k(b_i, b_j) + \frac{1}{m(m-1)} \sum_{i \neq j} k(\tilde{b}_i, \tilde{b}_j) - \frac{1}{m^2} \sum_{i,j} k(b_i, \tilde{b}_j)$$

Here, , $q_\phi$ is a skill encoder, $p_\phi$ is a skill decoder, $a_t$ is an action at time t, $s_t$ is a state at time t, $\tilde{b}$ is skill embedding, and $d_t$ is state-action pairs from t-n to tn+n-1.

In one embodiment, skill regularization may aim to decompose a dataset of each task into sharable subtasks.

When performing the operation of performing skill regularization, the task regularized task decomposition model may map n-step transitions to a task candidate space in case of data above a reference quality, solved by the same skill, infer with the same task in case of data above the reference quality, and infer with another task in case of data below the reference quality.

For example, the skill regularized task decomposition model may map given n-step transitions (states, actions, rewards, next states) to a subtask latent space to be allowed to have the same value as skill embedding when the skill currently performed in this data has received a high reward during the mapping process, and to be allowed to have another value when it has received a low reward.

The skill regularized task decomposition model may match a given task to a skill capable of solving the given task. The skill regularized task decomposition model may train a task encoder and a task decoder using a skill regularized loss.

For example, the skill regularization may be performed through training using a skill regularized loss of [Equation 2] below.

[Equation 2]

$$L_{SRTD}(\theta) = L_{TE}(\theta) + L_{SR}(\theta) + \lambda L_{PR}(\{\tilde{z}_i\}_{i=1}^m \sim P_Z, q_\theta(\{\tau_{t_i}\}_{i=1}^m))$$

Here, $$L_{TE}(\theta) = \frac{1}{m} \sum_{i=1}^{m} \sum_{i-n}^{0} \|(s_{t_i+j+1}, r_{t_i+j}) - p_\theta(s_{t_i+j}, a_{t_i+j}, q_\theta(\tau_{t_i}))\|_2$$ ,

$$L_{SR} = \frac{1}{m} \sum_{i=1}^{m} \tilde{R}(s_{t_i}, a_{t_i}) \cdot \|q_\theta(\tau_{t_i}) - q_\phi(d_{t_i})\|_2$$

, $q_\theta$ is a task encoder, $p_\theta$ is a task decoder, $r_t$ is a reward at time t, $\tau$ is a transition, $z$ is a subtask embedding vector, and $\tilde{R}$ is a reward sum of episodes including state-action pairs.

When performing the operation of decomposing the task in the units of episodes into the subtasks in units of n-steps, the skill regularized task decomposition model may infer a subtask using the task encoder trained in the skill regularized process.

In other words, the skill regularized task decomposition model may decompose a task in units of episodes into subtasks in units of n-steps through matching the task to a skill.

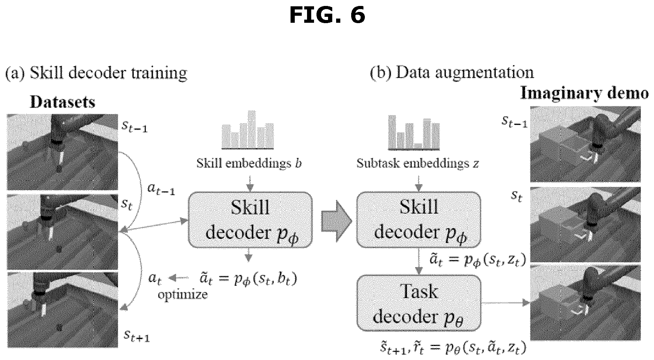

FIG. 6 is a view showing a structure of a data augmentation model through generating an imaginary demo.

Referring to FIG. 6, the data augmentation model may perform reinforcement learning by sharing the skill corresponding to the subtask among the plurality of tasks.

The data augmentation model may generate the imaginary demo by inferring data generated when performing a skill that is appropriate for a given task using the skill regularized task decomposition model.

The data augmentation model may augment learning data by training through adding subtask information to an input value.

For example, the imaginary demo may be generated through [Equation 3] below.

[Equation 3]

$$\tilde{a}_t, \; (\widetilde{s_{t+1}}, \; \tilde{r}_t) = p_\phi(s_t, \; z_t), \; p_\theta(s_t, \; \tilde{a}_t, \; z_t)$$

Here, $z_t = q_\phi(\tau_t)$, $a_t$ is an action at time t, $s_t$ is a state at time t, $r_t$ is a reward at time t, $z$ is a subtask embedding vector, $q_\theta$ is a task encoder, and $p_\theta$ is a task decoder.

That is, the reinforcement learning model of the present disclosure may train a skill regularized task decomposition model using given data, generate high-quality imaginary data by utilizing a skill decoder and a task decoder trained through skill regularized task decomposition, and train subtask information through adding to a reinforcement learning agent input value using a task encoder trained through skill regularized task decomposition.

As such, according to the reinforcement learning model of the present disclosure, it may be possible to enable efficient and stable learning of a control model through skill regularized task decomposition in consideration of data quality in a multi-task offline reinforcement learning environment in which the quality of data is inconsistent and data is insufficient.

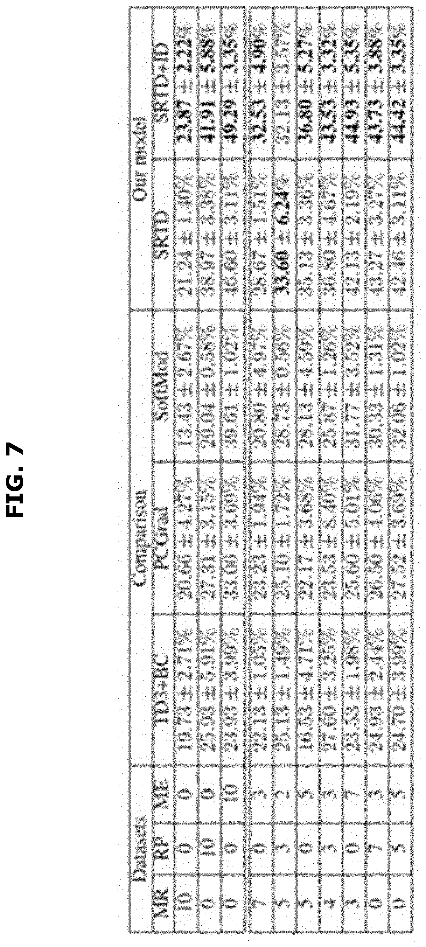

FIG. 7 is a diagram showing a robot arm control learning performance to which a reinforcement learning model according to embodiments of the present disclosure is applied.

Referring to FIG. 7, it can be confirmed that when robot arm control learning is performed using the reinforcement learning model of the present disclosure (SRTD+ID), learning performance is improved compared to other comparison groups.

Specifically, as shown in FIG. 7, it can be seen that when learning is performed over the same period of time through experiments, the reinforcement learning model of the present disclosure shows an average performance increase of 8.67 to 17.67% compared to a soft modularization method.

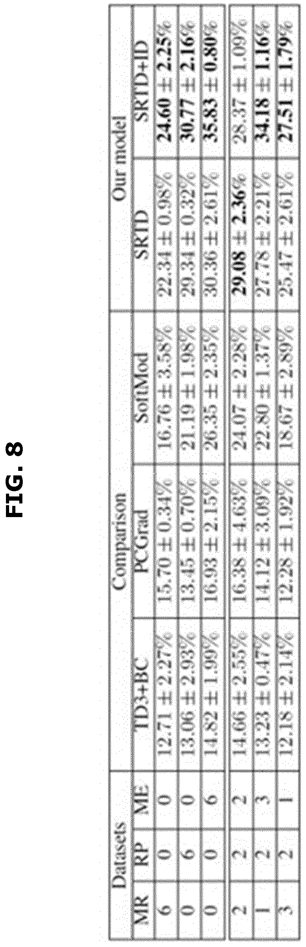

FIG. 8 is a diagram showing a drone driving learning performance to which a reinforcement learning model according to embodiments of the present disclosure is applied.

Referring to FIG. 8, it can be confirmed that when drone autonomous driving learning is performed using the reinforcement learning model of the present disclosure (SRTD+ID), learning performance is improved compared to other comparison groups.

Specifically, as shown in FIG. 8, it can be seen that when learning is performed over the same period of time through experiments, the reinforcement learning model of the present disclosure has an average performance increase of 5.01 to 11.37% compared to the soft modularization method.

Therefore, in case where the reinforcement learning model of the present disclosure is applied to the 4th industry such as robots, self-driving drones, and smart factories, it can solve the problems of inconsistent quality of data and lack of data when reinforcement learning is performed without interaction with the real environment, as well as solve the problem that arises when training reinforcement learning to be used in the real world, which has various non-interactable characteristics.

However, the details thereof have been described above, and thus a redundant description thereof will be omitted.

The device described above may be implemented as hardware components, software components, and/or a combination of hardware components and software components. For example, the devices and components described in the embodiments may be implemented using one or more general purpose or special purpose computers, such as, a processor, a controller, an arithmetic logic unit (ALU), a digital signal processor, a microcomputer, a field programmable array (FPA), a programmable logic unit (PLU), a microprocessor, or any other device capable of executing and responding to instructions. A processing device may run an operating system (OS) and one or more software applications running on the operating system. The processing device may also access, store, manipulate, process, and generate data in response to the execution of the software. For the convenience of understanding, in some case, it is described that only one processing device is used, but it will be appreciated for those skilled in the art to understand that the processing device includes a plurality of processing elements and/or a plurality of types of processing elements. For example, the processing device may include a plurality of processors or one processor and one controller. Furthermore, the processing device may include an additional processing configuration such as one including parallel processors.

The method according to the embodiments may be implemented in program instructions that can be executed through various types of computer means, and may be recorded in a computer-readable storage medium. The computer-readable recording medium may include program instructions, data files, data structures, and the like, alone or in combination thereof. The program instructions recorded in the medium may be designed and configured especially for the embodiments or may be known to and used by those skilled in computer software fields. Examples of the computer-readable recording medium include magnetic media such as hard disks, floppy disks, and magnetic tapes, optical media such as compact disk-read only memory (CD-ROM) and digital versatile disks (DVDs), magneto-optical media such as floptical disks, and hardware devices such as read-only memory (ROM), random access memory (RAM), and flash memory, which are specially configured to store and execute program instructions. Examples of the program instructions include not only machine language codes created by a compiler or the like, but also high-level language codes that can be executed by a computer using an interpreter or the like. The hardware devices may be configured to operate as one or more software modules in order to perform the operation of the embodiments, and vice versa.

As described above, though the embodiments have been described with limited drawings, those skilled in the art may make various modifications and variations from the above description. For example, although the above-described techniques are performed in a different order from that of the above-described method, and/or the above-described components, such as a system, a structure, a device, and circuit, are coupled or combined in a different form from that of the above-described method, or replaced or substituted with other components or equivalents, proper results may be achieved. Therefore, other implementations, other embodiments, and equivalents to the claims are within the scope of the following claims.

**Claims**

1. A reinforce learning model comprising a skill regularized task decomposition model in consideration of quality and a data augmentation model through generating an imaginary demo,
   wherein the skill regularized task decomposition model performs operations of:

   performing skill embedding using 2n-step state-action pairs;
   performing skill regularization using n-step transitions including states, actions, rewards, and next states; and
   decomposing a task in units of episodes into subtasks in units of n-steps.

2. The reinforce learning model of claim 1, wherein the skill regularized task decomposition model decomposes a task into subtasks by matching the subtasks to a plurality of skills in units of action sequences, and
   wherein the data augmentation model performs reinforcement learning by sharing the skill corresponding to the subtask among the plurality of tasks.

3. The reinforce learning model of claim 1 or 2, wherein when performing the operation of performing skill embedding, the skill regularized task decomposition model maps the 2n-step state-action pairs of offline data to a skill candidate space, and infers the 2n-step state-action pairs using the mapped candidate vector.

4. The reinforce learning model of claim 3, wherein the skill embedding is performed through training using a skill embedding loss of [Equation 1] below,

   [Equation 1]

   $$L_{SE}(\phi) = \frac{1}{m}\sum_{i=1}^{m}\sum_{j=-n}^{n-1}\|a_{t_i+j} - p_\phi(s_{t_i+j}, q_\phi(d_{t_i}))\|_2 + \lambda L_{PR}(\{\tilde{b}\}_{i=1}^{m}, q_\phi(\{d_{t_i}\}_{i=1}^{m}))$$
   ,

   wherein $L_{PR}(\{b\},\{\tilde{b}\}) = \frac{1}{m(m-1)}\sum_{i\neq j}k(b_i,b_j) + \frac{1}{m(m-1)}\sum_{i\neq j}k(\tilde{b}_i,\tilde{b}_j) - \frac{1}{m^2}\sum_{i,j}k(b_i,\tilde{b}_j)$ , $q_\phi$ is a skill encoder, $p_\phi$ is a skill decoder, $a_t$ is an action at time t, $s_t$ is a state at time t, $\tilde{b}$ is skill embedding, and $d_t$ is state-action pairs from t-n to t+n-1.

5. The reinforce learning model of any one of claims 1 to 4, wherein when performing the operation of performing skill regularization, the task regularized task decomposition model maps n-step transitions to a task candidate space, infers with the same task in case of data above a reference quality, solved by the same skill, and infers with another task in case of data below the reference quality.

6. The reinforce learning model of claim 5, wherein the skill regularization is performed through training using a skill regularized loss of [Equation 2] below,

[Equation 2]

$$L_{SRTD}(\theta) = L_{TE}(\theta) + L_{SR}(\theta) + \lambda L_{PR}(\{\tilde{z}_i\}_{i=1}^m \sim P_Z, \; q_\theta(\{\tau_{t_i}\}_{i=1}^m))$$

,

wherein

$$L_{TE}(\theta) = \frac{1}{m}\sum_{i=1}^m \sum_{j=-n}^0 \|(s_{t_i+j+1}, \; r_{t_i+j}) - p_\theta(s_{t_i+j}, \; a_{t_i+j}, \; q_\theta(\tau_{t_i}))\|_2$$

,

$$L_{SR} = \frac{1}{m}\sum_{i=1}^m \tilde{R}(s_{t_i}, a_{t_i}) \cdot \|q_\theta(\tau_{t_i}) - q_\phi(d_{t_i})\|_2$$

, $q_\theta$ is a task encoder, $p_\theta$ is a task decoder, $r_t$ is a reward at time t, $\tau$ is a transition, $z$ is a subtask embedding vector, and $\tilde{R}$ is a reward sum of episodes including state-action pairs.

7. The reinforce learning model of claim 6, wherein when performing the operation of decomposing the task in units of episodes into the subtasks in units of n-steps, the skill regularized task decomposition model infers a subtask using the task encoder trained in the skill regularized process.

8. The reinforce learning model of any one of claims 1 to 7, wherein the data augmentation model generates the imaginary demo by inferring data generated when performing a skill that is appropriate for a given task using the skill regularized task decomposition model, and augments learning data by training through adding subtask information to an input value.

9. The reinforce learning model of claim 8, wherein the imaginary demo is generated through [Equation 3] below,

[Equation 3]

$$\tilde{a}_t, \; (\tilde{s}_{t+1}, \; \tilde{r}_t) = p_\phi(s_t, \; z_t), \; p_\theta(s_t, \; \tilde{a}_t, \; z_t)$$

,

wherein $z_t = q_\theta(\tau_t)$, $a_t$ is an action at time t, $s_t$ is a state at time t, $r_t$ is a reward at time t, $z$ is a subtask embedding vector, $q_\theta$ is a task encoder, and $p_\theta$ is a task decoder.

10. A reinforce learning method comprising the steps of performing skill regularized task decomposition in consideration of quality, and performing data augmentation through generating an imaginary demo,
wherein the performing of the skill regularized task decomposition comprises:

   performing skill embedding using 2n-step state-action pairs;
   performing skill regularization using n-step transitions including states, actions, rewards, and next states; and
   decomposing a task in units of episodes into subtasks in units of n-steps.

**FIG. 1**

(a) Skill regularized task decomposition

(b) Data augmentation by imaginary demonstrations

Task 1 — High quality sub-trajectory

Task embeddings

Skill embeddings

Task N — Low quality sub-trajectory

Latent space $Z$

Imaginary demonstrations

Offline RL training

Multi-task offline datasets with imaginary demo.

Subtask embedding $z$

Policy $\pi(a|s,z)$

Task embeddings    Skill embeddings    High quality case    Low quality case

# FIG. 2

Start

Skill regularized task decomposition in consideration of quality ~S100

Data augmentation through generating imaginary demo ~S200

End

# FIG. 3

```
        ┌───────────┐
        │   Start   │
        └─────┬─────┘
              │
              ▼
   ┌─────────────────────────┐
   │     Skill embedding     │  ~ S110
   └─────────────────────────┘
              │
              ▼
   ┌─────────────────────────┐
   │   Skill regularization  │  ~ S120
   └─────────────────────────┘
              │
              ▼
   ┌─────────────────────────┐
   │ Decompose task into subtasks │  ~ S130
   └─────────────────────────┘
              │
              ▼
        ┌───────────┐
        │    End    │
        └───────────┘
```

## FIG. 4

# FIG. 5

---

**Algorithm 1** Skill regularized task decomposition

---

Offline dataset $\mathcal{D}$, subtask embedding parameter $\theta$, skill embedding parameter $\phi$

Regulation hyperparameter $\lambda$, batch size $m$, learning rate $\eta$

**loop**

$\quad$ Sample $\{d_{t_i}, \tau_{t_i}, s_{t_i-n:t_i+n}, a_{t_i-n:t_i+n}, r_{t_i-n:t_i}\}_{i=1}^{m} \sim \mathcal{D}$

$\quad \{b_{t_1}, b_{t_2}, ..., b_{t_m}\} = q_\phi(\{d_{t_1}, d_{t_2}, ..., d_{t_m}\}), \{z_{t_1}, z_{t_2}, ..., z_{t_m}\} = q_\theta(\{\tau_{t_1}, \tau_{t_2}, ..., \tau_{t_m}\})$

$\quad \{\tilde{b}_0, \tilde{b}_1, ..., \tilde{b}_n\} \sim P_B = \mathcal{N}(0,1), \quad \{\tilde{z}_0, \tilde{z}_1, ..., \tilde{z}_n\} \sim P_Z = \mathcal{N}(0,1)$

$\quad L_{SE}(\phi) = \frac{1}{m} \sum_{i=1}^{m} \sum_{j=-n}^{n-1} \|a_{t_i+j} - p_\phi(s_{t_i+j}, b_{t_i})\|_2 + L_{PR}(\{b_{t_i}\}_{i=1}^{m}, \{\tilde{b}_i\}_{i=1}^{m})$ using (1)

$\quad L_{TE}(\theta) = \frac{1}{m} \sum_{i=1}^{m} \sum_{j=-n}^{0} \|(s_{t_i+j+1}, r_{t_i+j}) - p_\theta(s_{t_i+j}, a_{t_i+j}, z_{t_i})\|_2$ using (3)

$\quad L_{SR}(\theta) = \frac{1}{m} \sum_{i=1}^{m} \tilde{R}(s_{t_i}, a_{t_i}) \cdot \|q_\theta(\tau_{t_i}) - q_\phi(d_{t_i})\|_2$ using (4)

$\quad L_{SRTD}(\theta) = L_{TE}(\theta) + L_{PR}(\{z_{t_i}\}_{i=1}^{m}, \{\tilde{z}_i\}_{i=1}^{m})) + L_{SR}(\theta)$ using (5)

$\quad \phi \leftarrow \phi + \eta \cdot \nabla L_{SE}, \theta \leftarrow \theta + \eta \cdot \nabla L_{SRTD}$

**end loop**

**return** $\theta, \phi$

---

# FIG. 6

(a) Skill decoder training

(b) Data augmentation

**Datasets**

**Imaginary demo**

Skill embeddings $b$

Subtask embeddings $z$

$s_{t-1}$

$a_{t-1}$

$s_t$

Skill decoder $p_\phi$

Skill decoder $p_\phi$

$s_{t-1}$

$s_t$

$\tilde{a}_t = p_\phi(s_t, z_t)$

$a_t \leftarrow \tilde{a}_t = p_\phi(s_t, b_t)$
optimize

Task decoder $p_\theta$

$s_{t+1}$

$\tilde{s}_{t+1}, \tilde{r}_t = p_\theta(s_t, \tilde{a}_t, z_t)$

## FIG. 7

| Datasets | | | Comparison | | | Our model | |
|---|---|---|---|---|---|---|---|
| MR | RP | ME | TD3+BC | PCGrad | SoftMod | SRTD | SRTD+ID |
| 10 | 0 | 0 | 19.73 ± 2.71% | 20.66 ± 4.27% | 13.43 ± 2.67% | 21.24 ± 1.40% | **23.87 ± 2.22%** |
| 0 | 10 | 0 | 25.93 ± 5.91% | 27.31 ± 3.15% | 29.04 ± 0.58% | 38.97 ± 3.38% | **41.91 ± 5.88%** |
| 0 | 0 | 10 | 23.93 ± 3.99% | 33.06 ± 3.69% | 39.61 ± 1.02% | 46.60 ± 3.11% | **49.29 ± 3.35%** |
| 7 | 0 | 3 | 22.13 ± 1.05% | 23.23 ± 1.94% | 20.80 ± 4.97% | 28.67 ± 1.51% | **32.53 ± 4.90%** |
| 5 | 3 | 2 | 25.13 ± 1.49% | 25.10 ± 1.72% | 28.73 ± 0.56% | **33.60 ± 6.24%** | 32.13 ± 3.57% |
| 5 | 0 | 5 | 16.53 ± 4.71% | 22.17 ± 3.68% | 28.13 ± 4.59% | 35.13 ± 3.36% | **36.80 ± 5.27%** |
| 4 | 3 | 3 | 27.60 ± 3.25% | 23.53 ± 8.40% | 25.87 ± 1.26% | 36.80 ± 4.67% | **43.53 ± 3.32%** |
| 3 | 0 | 7 | 23.53 ± 1.98% | 25.60 ± 5.01% | 31.77 ± 3.52% | 42.13 ± 2.19% | **44.93 ± 5.35%** |
| 0 | 7 | 3 | 24.93 ± 2.44% | 26.50 ± 4.06% | 30.33 ± 1.31% | 43.27 ± 3.27% | **43.73 ± 3.88%** |
| 0 | 5 | 5 | 24.70 ± 3.99% | 27.52 ± 3.69% | 32.06 ± 1.02% | 42.46 ± 3.11% | **44.42 ± 3.35%** |

**FIG. 8**

| Datasets | | | Comparison | | | Our model | |
|---|---|---|---|---|---|---|---|
| MR | RP | ME | TD3+BC | PCGrad | SoftMod | SRTD | SRTD+ID |
| 6 | 0 | 0 | $12.71 \pm 2.27\%$ | $15.70 \pm 0.34\%$ | $16.76 \pm 3.58\%$ | $22.34 \pm 0.98\%$ | **$24.60 \pm 2.25\%$** |
| 0 | 6 | 0 | $13.06 \pm 2.93\%$ | $13.45 \pm 0.70\%$ | $21.19 \pm 1.98\%$ | $29.34 \pm 0.32\%$ | **$30.77 \pm 2.16\%$** |
| 0 | 0 | 6 | $14.82 \pm 1.99\%$ | $16.93 \pm 2.15\%$ | $26.35 \pm 2.35\%$ | $30.36 \pm 2.61\%$ | **$35.83 \pm 0.80\%$** |
| 2 | 2 | 2 | $14.66 \pm 2.55\%$ | $16.38 \pm 4.63\%$ | $24.07 \pm 2.28\%$ | **$29.08 \pm 2.36\%$** | $28.37 \pm 1.09\%$ |
| 1 | 2 | 3 | $13.23 \pm 0.47\%$ | $14.12 \pm 3.09\%$ | $22.80 \pm 1.37\%$ | $27.78 \pm 2.21\%$ | **$34.18 \pm 1.16\%$** |
| 3 | 2 | 1 | $12.18 \pm 2.14\%$ | $12.28 \pm 1.92\%$ | $18.67 \pm 2.89\%$ | $25.47 \pm 2.61\%$ | **$27.51 \pm 1.79\%$** |

Europäisches
Patentamt

European
Patent Office

Office européen
des brevets

# EUROPEAN SEARCH REPORT

Application Number

EP 23 20 3809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOO MINJONG ET AL: "Skills Regularized Task Decomposition for Multi-task Offline Reinforcement Learning", 36TH CONFERENCE ON NEURAL INFORMATION PROCESSING SYSTEMS (NEURIPS 2022), 31 October 2022 (2022-10-31), XP093143563, * abstract; figures 1-3; tables 1-2 * * sections 1-4, 6, Appendix B * ----- | 1-10 | INV. G06N3/092 G06N3/096 G06N3/0455 |

TECHNICAL FIELDS
SEARCHED       (IPC)

G06N

The present search report has been drawn up for all claims

| Place of search | Date of completion of the search | Examiner |
|---|---|---|
| The Hague | 21 March 2024 | Cilia, Elisa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 4 375 885 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220159388

- KR 1020220117625